Europäisches Patentamt

European Patent Office

Office européen des brevets

(11) Publication number: **0 181 730**
A2

# (12) EUROPEAN PATENT APPLICATION

(21) Application number: **85307797.2**

(22) Date of filing: **29.10.85**

(51) Int. Cl.⁴: **B 60 J 5/06**

(30) Priority: **31.10.84 GB 8427582**

(43) Date of publication of application:
**21.05.86 Bulletin 86/21**

(84) Designated Contracting States:
**DE FR IT**

(71) Applicant: **O'Brien, Stephen**
**195 Wood Lane**
**Heskin Near Chorley Lancashire(GB)**

(71) Applicant: **O'Brien, Steven**
**195 Wood Lane**
**Heskin Near Chorley Lancashire(GB)**

(72) Inventor: **O'Brien, Stephen**
**195 Wood Lane**
**Heskin Near Chorley Lancashire(GB)**

(72) Inventor: **O'Brien, Steven**
**195 Wood Lane**
**Heskin Near Chorley Lancashire(GB)**

(74) Representative: **Lawrence, John Gordon et al,**
**McNeight & Lawrence Regent House Heaton Lane**
**Stockport, Cheshire SK4 1BS(GB)**

(54) Stowable cover.

(57) There is disclosed a cover for an otherwise unenclosed part such as the back of a pick-up truck or lorry. The cover comprises a flexible sheet carried by frame members slidable longitudinally of the part between a stowed position wherein they are closely spaced at one end of the part and an operative position wherein they are spaced to support the sheet over the part. Sliding movement of the frame members is effected by means of at least one motor.

EP 0 181 730 A2

## STOWABLE COVER

This invention concerns a stowable cover adapted to extend over an otherwise unenclosed part such as the top and sides, or just sides of the load carrying part of a wheeled vehicle such as a pick-up truck or lorry or the cockpit of a yacht or a swimming pool top, for example. Such unenclosed parts will be referred to hereinafter simply as open parts of the kind referred to.

Many kinds of cover for open parts of the kind referred to are known, including enclosures of canvas or similar sheet material adapted to be supported by a framework which may be either removable or fixed and more elaborate pre-fabricated enclosures, such as fibre-glass reinforced resin mouldings for example, which need to be lifted into and out of position, often by more than one person.

Generally these prior known covers are time-consuming to erect and dismantle, somewhat costly and in many cases difficult and bulky to store when not in use. This is especially true of those kinds of cover for use on vehicles and which cannot be stowed on the vehicle when they are not in use.

More popular, therefore, are various known covers for an open part of the kind referred to comprising a plurality of frame members secured beneath a cover of flexible weatherproof material.  The opposite ends of each frame member connect with means which support them for sliding movement over the open part, whereby they may be moved between a first position wherein they are spaced apart with the cover forming a sheet-like enclosure and a second position wherein they are packed together leaving the open part substantially unenclosed.

These arrangements, particularly those of larger size, can be difficult to operate single-handed, since attempts to slide a frame member from one side tends to cause the member to twist and bind against its supporting means.

To some extent this problem has been overcome by a cable system which transmits forces applied to one side of a frame member to the other, as described in my co-pending British Patent Application No. 8421250.  Even so, operation of the cover can be a strenuous task and unpleasant in inclement weather conditions.

It is an object of the present invention to provide an improved cover for open parts of the kind referred to which is particularly convenient and readily moved between its extended and stowed conditions without the problems aforesaid.

According to the invention there is provided a cover for an open part of the kind referred to, comprising at least one rail member adapted to be secured along each of the two longitudinal sides of the said part, a plurality of supporting frame members extending transversely between said rail members on opposite sides of said open part, on the free end of each opposite side of each said frame member a connection means at least partially surrounding the or each of said rail members on that side for sliding movement therealong, a sheet of material bridging the spaces between said frame members, the frame members being movable from a position wherein they are packed together at one end of the rail members, to leave the open part substantially unenclosed and a position where they are spaced from one another so that said sheet forms a sheet-like enclosure over the open part and motor means for moving the frame members between their two positions.

Preferably said motor means is reversible and operable by means of a three position switch.

It will, of course, be appreciated that when the open part is provided by a vehicle, the motor means may be operable from within the driver's cab of such vehicle.

The invention will be further apparent from the following description with reference to and as illustrated by the several figures of the accompanying drawings which show, by way of example only, two forms of stowable cover, fitted to the open part of a motor driven pick-up truck and embodying the invention.

Of the drawings:-

Figure 1    shows a side view of the truck with the first form of the cover in its erected position, but with the sheet partly cut-away to reveal the underlying framework;

Figure 2    shows a rear view of the truck with the cover in its erected position, again with the sheet partly cut-away;

Figure 3    shows a cross-sectional view on an enlarged scale, of the connection between the lower end of one of the depending limbs of a supporting frame member and the rail pair at one side of the truck;

Figure 4    shows a cross-section on the line III
            - III of Figure 3;

Figure 5    shows a plan view of cable hauling
            means for the supporting frame
            members.

Figure 6    shows a fragmentary perspective view
            of the rear parts of a pick-up truck
            having a second form of stowable
            cover.

Figure 7    shows a cross-section through the
            connection on one side between one of
            the frame members and its supporting
            rail of the truck of Figure 6.

and    Figure 8    Shows a cross-section through the
            connection on the line VIII - VIII of
            Figure 7.

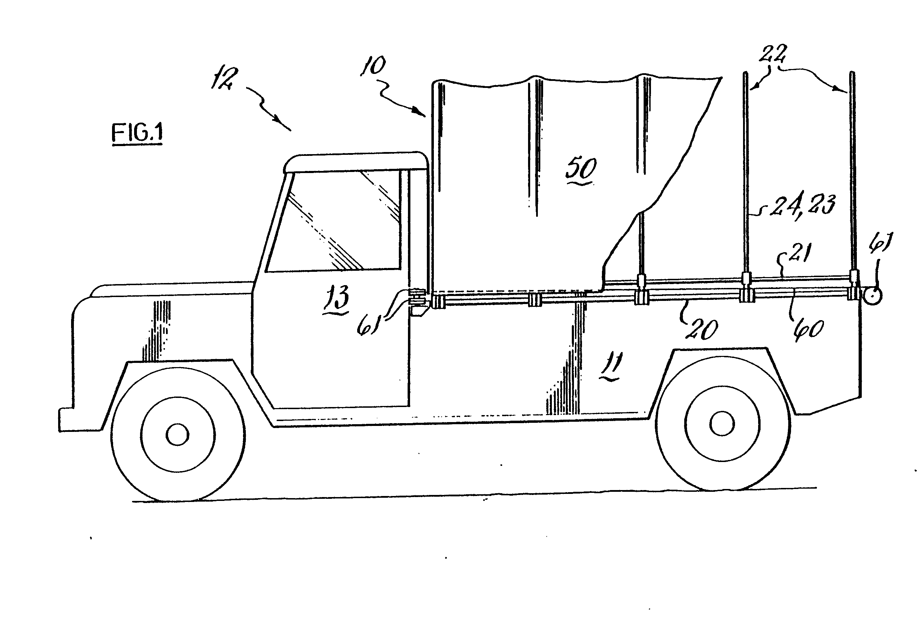

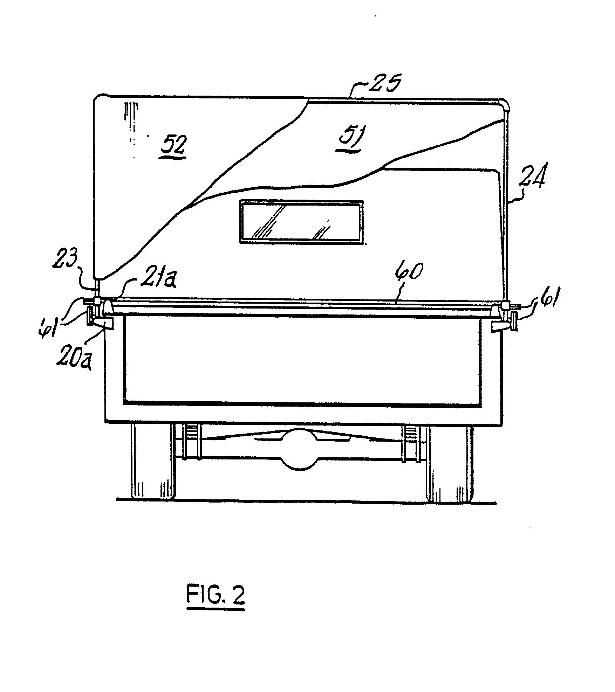

Referring firstly to Figures 1-5 of the drawings, it
will be seen that the stowable cover generally indicated
at 10 is fitted to and over an open back part 11, of a
pick-up truck 12, having a driver's cab 13, forwardly of the part 11.  The cover comprises a pair of parallel transversely spaced rails 20 and 21, secured to each of the opposed longitudinal sides of the part 11, by means of brackets 20a and 21a at their forward and rearward ends, and a plurality of supporting frame members 22, each of generally inverted U-shape having opposed limbs 23 and 24 depending from a connecting horizontal top portion 25.  The frame members 22 extend transversely between the two pairs of rails on the opposite sides of the part 11 and have the free ends of their depending limbs connected to said rails for sliding movement therealong.

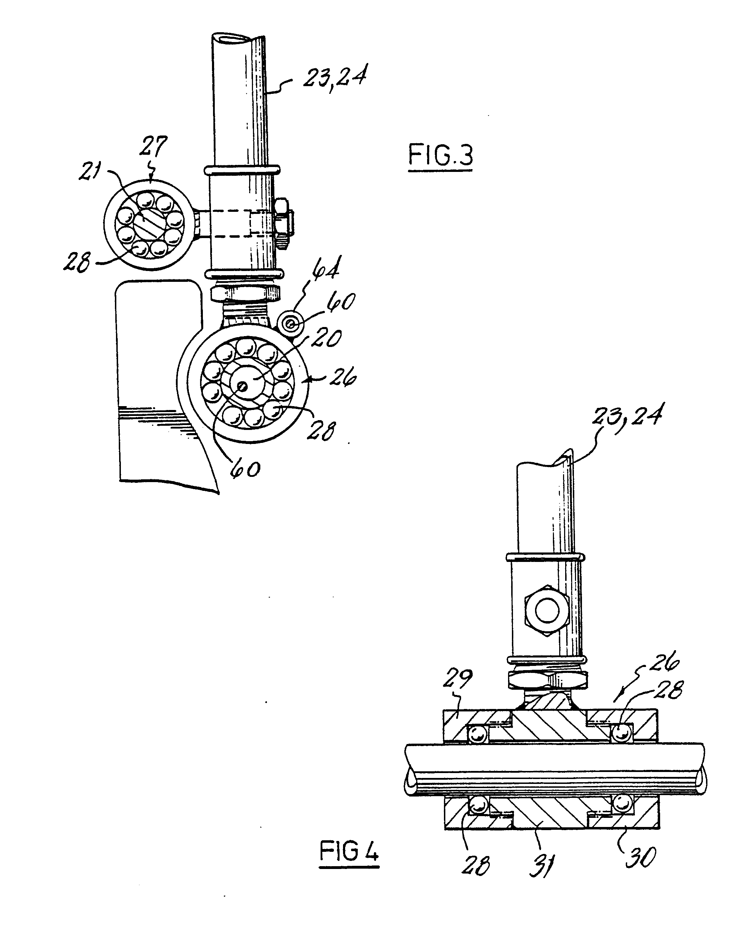

Referring now to Figures 3 and 4, it will be seen that the lower end of each of the depending limbs of each frame member 22 carries a pair of annular connecting members 26 and 27 which surround the rails 20 and 21 respectively.  A plurality of ball bearings 28 are provided between the inner periphery of the members 26 and 27 and the outer periphery of the rails 20 and 21.  The rail 20 is in the form of a tube whilst the rail 21 is in the form of a rod.  In at least one and preferably both of the members 26 and 27 the ball bearings 28 are divided into two sets which are spaced from one another longitudinally of the rails and which are held captive between caps 29 and 30 having inwardly directed flanges and a central barrel 31 onto whose opposed ends the caps 29 and 30 screw.

It will be understood that the frame members 22 can be moved from a first or stowed position wherein they are all packed closely adjacent to one another at the forward end of the part 11, and a second or operative position wherein they are equally spaced along the length of the part 11.

It will be understood that when the frame members are in their second position the whole assembly described thus far, forms an extremely rigid cage-like structure which is constrained from tilting movement in any direction when subjected to normal forces by virtue of the transverse spacing of the rail members at each side and the longitudinally spaced sets of ball bearings in the connecting members.

The cover 10 includes a sheet 50 of material which is at least resistant to penetration by weather such as canvas or impermeable such as textile reinforced plastics. The sheet 50 has a length equal to that of the part 11 and a width equal to the length of a frame member 22 measured along the limbs 23 and 24 as well as the top portion 25. The sheet 50 is secured over each of the frame members 22 and bridges the space 22 between the adjacent ones thereof. It will be understood that when the frame members 22 are in their second or operative position, the sheet 50 forms a tunnel-like enclosure to the part 11. When the frame members 22 are in their stowed position the sheet 50 is loosely bunched up between them. Front and back flaps 51 and 52 are preferably provided to complete the enclosure. The front flap 51 is secured as by stitching for example to the three forward edges of the sheet 50, whilst the back flap 52 is secured along its upper edge only so that it may be rolled up or pulled aside to give access to the interior of the enclosure.

In accordance with the invention motor driven means is provided for moving the frame members 22 between their two positions.

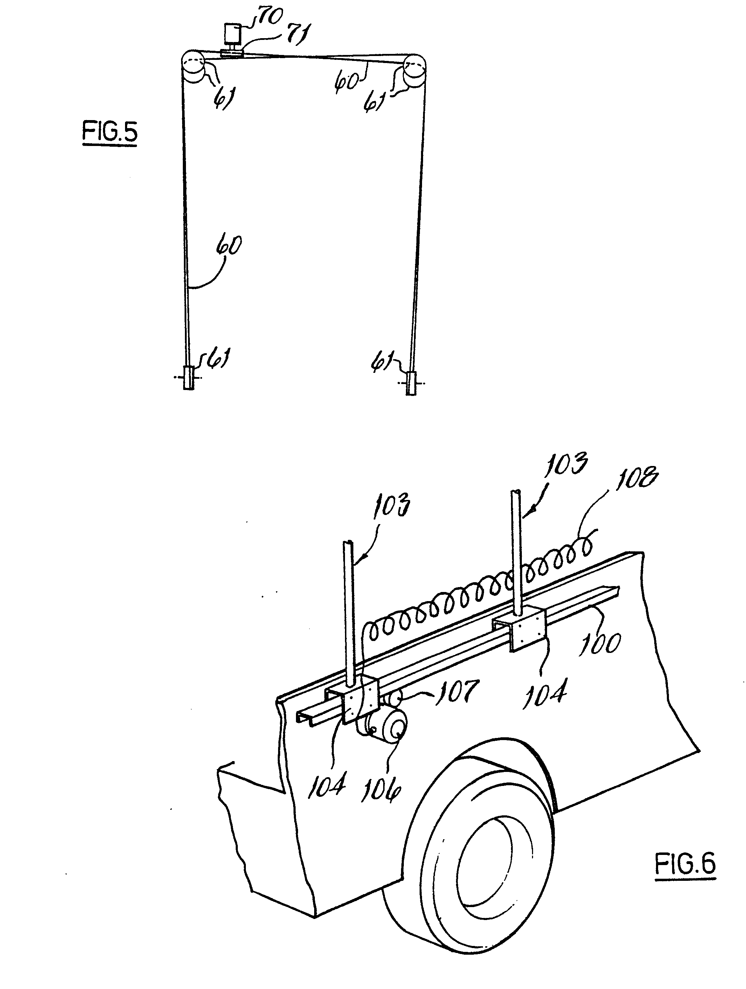

This means comprises an endless cable 60 (see Fig. 5) carried by pulleys 61 and arranged to have two lengths thereof extending over the two longitudinal sides and the forward end of the open part. The cable crosses itself once (or some other odd number of times) at the forward end. The cable 60 passes on each side through eyes 64 secured to the members 26 to return by passage over one of the pulleys 61 at the rear of the part 11 and through the interior of the rail 20. The cable 60 is anchored to the eyes 64 of the rearmost members 26.

It will be understood that forward or rearward movement of the rearmost member 22 from one side operates through the cable 60 to move the rearmost member 22 on the other side in like fashion, making for ease of movement.

The cable can be moved in one direction or the other by means of a reversible electric motor 70 which drives a drum 71 lapped by the cable 60. The motor is controlled by a three position switch - DEPLOY/OFF/STOW - mounted in the vehicle cab.

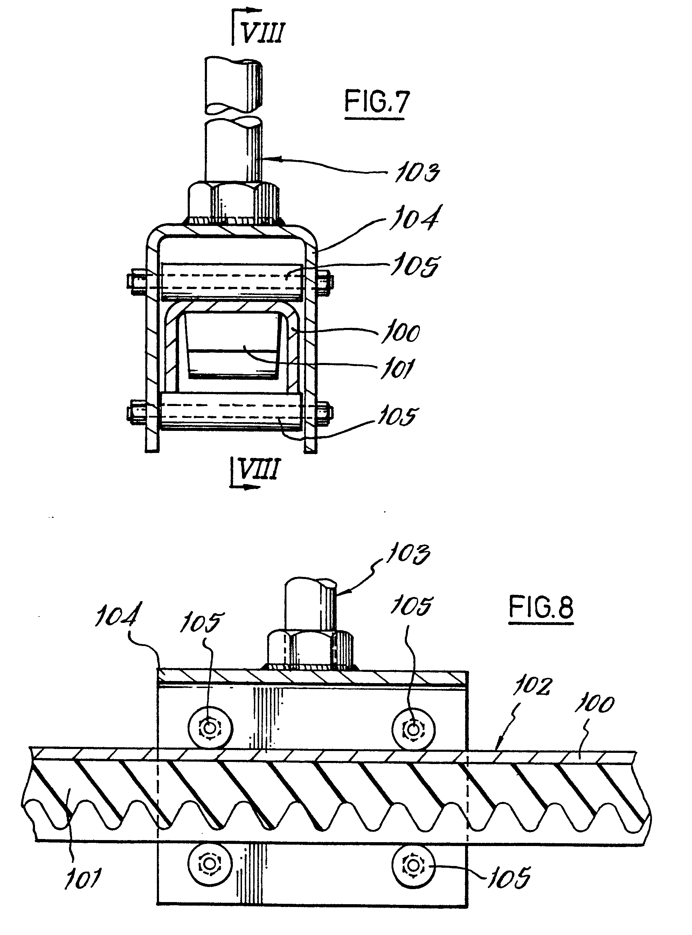

In the varied arrangement of Figures 6-8 single rails 100 only are provided on each side. Each rail 100 is comprised by an inverted channel section having a strip of reinforced rubber racked belting 101 secured to the underside of its top web 102 and extending over the length thereof. The inverted U-shaped frame members 103 have mounts 104 on their opposed lower ends engaging the two rails 100 respectively. The mounts 104 are comprised by short lengths of channel section which is a clearance fit over the channel section of the rails 100. Roller bearings 105 are mounted on axles extending between the opposite downwardly projecting flanges of the mounts 104. Upper and lower longitudinally spaced pairs of roller bearings 105 in each mount 104 engage the upper surface of the top web of the channel section of the rails 100 and the lower extremities of the downwardly projecting flanges of the channel section of the rails 100 respectively, all whereby the frame members 103 may be slid along the rails 100 with little resistance to their movement.

On each side limb of the rearmost frame member 103 is a reversible geared electric motor 106 adapted to drive a pinion 107 engaging the belting 101 on that side. Power is supplied from a three position switch mounted in the vehicle cab to the motors 106 through helically coiled extensible cables 108 looped between adjacent frame members 103.

It will be understood that the motors 106 can be operated in either direction to move the frame members 103 between their first and second positions.

It will be appreciated that it is not intended to limit the invention to the above example only, many variations, such as might readily occur to one skilled in the art, being possible, without departing from the scope thereof.

Thus, the pinions 107 may engage notches or similar formations in the rails 100 instead of the belting 101 through such is preferred for quietness of operation.

Again, for example in the embodiment of Figures 6-8 each of the motors 106 might drive a tyred wheel engaging a flat track along the side of the open part or even a suitable portion of the side of the vehicle bodywork.

The frame members need not be in the form of hoops, they could be comprised by straight bars, the cover then being adapted for deployment over an open part such as a lorry side, the top of a swimming pool or other such open part. The sheet between the frame members for a swimming pool cover may desirably be permeable to water.

## CLAIMS

1.    A cover for an open part of the kind referred to comprising at least one rail member adapted to be secured along each of the two longitudinal sides of the said part, a plurality of supporting frame members extending transversely between said rail members on opposite sides of said open part, on the free end of each opposite side of each said frame member a connection means at least partially surrounding the or each of said rail members on that side for sliding movement therealong, a sheet of material bridging the spaces between said frame members, the frame members being movable from a position wherein they are packed together at one end of the rail members, to leave the open part substantially unenclosed and a position where they are spaced from one another so that said sheet forms a sheet-like enclosure over the open part and motor means for moving the frame members between their two positions.

2.    A cover according to claim 1 wherein said motor means is reversible and operable by a three position switch.

3.    A cover according to claim 1 or claim 2 wherein said motor means is comprised by at least one geared electric motor.

4.    A cover according to claim 3 comprising a track on each of the opposite sides of the open part extending longitudinally thereof, one of said motors connected to each of the opposite ends of an end one of said frame members and having a driving means engaging the track on its side of the open part.

5.    A cover according to claim 4 wherein said tracks are connected with said rail members.

6.    A cover according to either claim 4 or claim 5 wherein each said driving means is comprised by a toothed pinion.

7.    A cover according to claim 6 wherein each said track is comprised by a strip of reinforced rubber racked belting.

8.    A cover according to claim 3 including an endless cable guided by pulleys and having two lengths thereof extending over the two sides and over one end of the open part and being anchored to opposite sides of an end frame member, there being one said electric motor connected with one said pulley, the arrangement being such that driving the motor in one or other direction causes the frame members to move between their said two positions.

9.     A cover according to any preceding claim wherein in each said frame member is in the form of a hoop having opposed depending limbs connected by a top portion.

10.     A cover according to any preceding claim wherein said open part is an unenclosed part of a wheeled vehicle such as a pick-up truck or lorry.

FIG.1

FIG. 2

0181730

FIG.3

FIG 4

0181730

FIG.5

FIG.6

0181730

VIII

FIG.7

103

104

105

100

101

105

VIII

103

104    105    105    FIG.8

102    100

101

105